# EUROPÄISCHE PATENTANMELDUNG

(11) **EP 3 260 664 A1**
(43) Veröffentlichungstag der Anmeldung: **27.12.2017**
(21) Anmeldenummer: 17173191.2
(22) Anmeldetag: 29.05.2017
(51) Int. Cl.: F01D 11/00, F01D 5/34

(54) **VERDICKTER RADIAL ÄUSSERER RINGBEREICH EINES DICHTFINS**

(30) Priorität: 24.06.2016 DE 102016211337
(71) Anmelder: MTU Aero Engines AG, 80995 München (DE)
(72) Erfinder: GEPPERT, Johann, 82299 Türkenfeld (DE); HERTTER, Manuel, 81243 München (DE)

(57) **Zusammenfassung**

Eine erfindungsgemäße Blisk 10 für eine Gasturbine umfasst eine um eine zentrale Achse X herum verlaufende Laufschaufelreihe 12 und - zu dieser axial versetzt und koaxial verlaufend - mindestens einen ringartigen Dichtfin 11. Der Dichtfin weist einen radial äußeren Ringbereich 111 auf, der gegenüber einem radial weiter innen liegenden Ringbereich 113 verdickt ist.

Ein erfindungsgemäßer Verdichter 1 umfasst einen Rotor und ein Gehäuse 30. Dieses umfasst mindestens eine Leitschaufelreihe mit mindestens einem Einlaufbelag. Der Rotor umfasst mindestens eine erfindungsgemäße Blisk 10, deren mindestens einer Dichtfin 11 wenigstens teilweise in den Einlaufbelag eingreift. Eine erfindungsgemäße Turbine ist analog aufgebaut.

Ein erfindungsgemäßes Verfahren zum Herstellen einer Blisk 10 für eine Gasturbine umfasst ein Fertigen einer Blisk 10 mit mindestens einem ringartigen Dichtfin 11 sowie ein Aufbringen einer Beschichtung 116 auf eine radial äußere Oberfläche 115 eines verdickten Ringbereichs 111 des Dichtfins 11.

## Beschreibung

Die vorliegende Erfindung betrifft eine Blisk für eine Gasturbine, ferner einen Verdichter sowie eine Turbine mit einer derartigen Blisk und ein Verfahren zur Herstellung einer Blisk.

Verdichter werden in Gasturbinen, beispielsweise in Flugtriebwerken, dazu eingesetzt, durch sie hindurchströmende Luft zu komprimieren und dadurch in einen höheren Energiezustand zu bringen. Ein Gemisch aus der Luft und einem Brenngas wird danach in einer Brennkammer gezündet und anschließend in jeweils zugehörigen, eigentlichen Turbinen (Expandern) wieder entspannt. Die dadurch gewonnene Energie wird in der Regel zu einem Teil zum weiteren Antrieb des Verdichters verwendet, zu einem anderen Teil als Nutzenergie zum Antrieb des jeweiligen Aggregats bzw. zum Erzeugen von Schub.

Verdichter ebenso wie Turbinen umfassen in der Regel einen Rotor mit einer Mehrzahl an Laufschaufelreihen, die mit einer Rotorwelle verbunden und von außen von einem Gehäuse umgeben ist, so dass zwischen der Rotorwelle und dem Gehäuse ein Strömungskanal ausgebildet ist. Am Gehäuse befestigte Leitschaufeln sind dazu eingerichtet, durch den Strömungskanal fließendes Gas in jeweils geeigneter Weise auf die Laufschaufeln zu führen. Die Laufschaufeln können jeweils einzeln gefertigt und in Aufnahmenuten der Rotorwelle eingesetzt sein, oder es können einteilige Blisks (bladed disk) verwendet werden, die jeweils eine Scheibe oder einen Ring mit einer Mehrzahl einstückig daran angeformter oder angefügter (z.B. angeschweißter) Laufschaufeln umfassen. Derartige Blisks weisen gegenüber den aus Einzelschaufeln zusammengesetzten Laufschaufelreihen insbesondere den Vorteil einer größeren mechanischen Belastbarkeit und eines geringeren Gewichts auf.

Zur Vermeidung von Verlusten müssen insbesondere zwischen beweglichen und feststehenden Bauteilen ausgebildete Durchlässe möglichst klein gehalten werden. Beispielsweise sind zur Abdichtung derartiger Durchlässe zwischen der Rotorwelle und den radial innen angeordneten Spitzen der Leitschaufeln sogenannte "Dichtfins" bekannt: Diese sind im Allgemeinen jeweils als ein ringartiger radialer Vorsprung ausgebildet und dazu eingerichtet, mit einem radial außen liegenden Abschnitt (der hier auch als "Einlaufbereich" des jeweiligen Dichtfins bezeichnet wird) in Einlaufbeläge einzugreifen, die an den Spitzen der Leitschaufeln angeordnet sind; die Angabe "radial" bezieht dabei sich in dieser Schrift ebenso wie "axial" - sofern nichts anderes angegeben ist - stets auf eine (vorgesehene) Rotationsachse der Rotorwelle.

Damit die Dichtfins den auftretenden mechanischen und thermischen Belastungen beim Eingreifen in die Einlaufbeläge standhalten können, werden ihre entsprechend beanspruchten Oberflächen in der Regel beschichtet. Für ein gezieltes Beschichten in den gewünschten Regionen ist es jedoch erforderlich, dass die vorgesehenen Bereiche für das jeweilige Beschichtungswerkzeug zugänglich sind. Bei den vorteilhaften einteiligen Blisks kann deshalb das Beschichten von einer axialen Richtung her wegen einer in geringem Abstand angeordneten Laufschaufelreihe oder eines nahen anderen Dichtfins unmöglich oder zumindest mit hohem Aufwand verbunden sein, weil das Beschichten nur aus einer radialen Richtung (von außen nach innen) durchführbar sein kann. Flanken eines Dichtfins, die sich im Wesentlichen radial (senkrecht zur Rotationsachse) erstrecken, werden so nicht ausreichend erreicht und sind daher gegen Reibung, die aus tiefem Einlauf und gleichzeitigen axialen Bewegungen von Rotor und Gehäuse relativ zueinander resultiert, ungenügend geschützt. Dadurch kann an diesen Flanken ein Metallkontakt auftreten, bei dem die Dichtfins geschädigt werden können, was ein vorzeitiges Versagen des Rotors und schwere Schäden am Triebwerk zur Folge haben kann.

Die vorliegende Erfindung hat die Aufgabe, eine Technik bereitzustellen, mit der die genannten Nachteile vermieden werden können.

Die Aufgabe wird gelöst durch eine Blisk gemäß Anspruch 1, einen Verdichter gemäß Anspruch 8, eine Turbine gemäß Anspruch 9 und ein Verfahren zur Herstellung einer Blisk gemäß Anspruch 10. Vorteilhafte Ausführungsformen sind in den Unteransprüchen, der Beschreibung und den Figuren offenbart.

Eine erfindungsgemäße Blisk ist für einen Einbau in einer Gasturbine (z.B. einem Flugzeugtriebwerk) vorgesehen oder bereits in einer Gasturbine eingebaut, insbesondere in einem Verdichter oder in einer Turbine (einem Expander). Sie weist eine um eine (abstrakte) zentrale Achse herum verlaufende Laufschaufelreihe sowie, zu dieser axial versetzt, mindestens einen ringartigen Dichtfin auf, der koaxial zur Laufschaufelreihe verläuft; die zentrale Achse ist dabei die (vorgesehene) Rotationsachse der Gasturbine.

Der mindestens eine Dichtfin weist einen radial äußeren Ringbereich (also ringartigen Bereich) auf, der gegenüber einem radial weiter innen liegenden Ringbereich des Dichtfins (in axialer Richtung) verdickt ist, also eine größere axiale Dicke aufweist als der radial weiter innen liegende Ringbereich. Als "axiale Dicke" oder auch schlicht "Dicke" eines Ringbereichs wird dabei in dieser Schrift dessen maximale Ausdehnung (Erstreckung) in axialer Richtung bezeichnet.

Die genauen Begrenzungen der genannten Ringbereiche sind dabei nicht unbedingt physikalisch vorgegeben, vielmehr können sie als entsprechende ringartige Bereiche mit den geforderten Eigenschaften am Dichtfin bestimmt werden.

Aufgrund der größeren Dicke des radial äußeren Ringbereichs steht dieser in mindestens einem Abschnitt gegenüber dem radial weiter innen liegenden Ringbereich in axialer Richtung über. Der radial weiter innen liegende Ringbereich bildet also gegenüber diesem Abschnitt einen Hinterschnitt aus. Insbesondere kann der verdickte Ringbereich mindestens eine der zentralen Achse zugewandte Oberfläche aufweisen. Wenn im Gebrauch eine axiale Bewegung des Rotors relativ zum Stator bzw. zu den Leitschaufeln auftritt, kommt es daher an der entsprechenden Flanke des Dichtfins allenfalls am Überhang, also am überstehenden Abschnitt des verdickten Ringbereichs zum Kontakt. Bereits mittels eines Beschichtens des verdickten Ringbereichs können daher die oben genannten Nachteile des Kontakts verhindert werden. Da dieser verdickte, radial äußere Ringbereich relativ gut von radial außen zugänglich ist, vereinfacht und verbessert eine erfindungsgemäße Blisk vorteilhaft ein Aufbringen einer Beschichtung und ermöglicht damit auf effiziente Weise, eine Dichtung zu verbessern.

Ein erfindungsgemäßer Verdichter und eine erfindungsgemäße Turbine für eine Gasturbine umfassen jeweils einen Rotor sowie ein Gehäuse mit mindestens einer Leitschaufelreihe. Die Leitschaufeln erstrecken sich radial von außen nach innen, und an ihren (radial innen liegenden) Spitzen ist ein Einlaufbelag angeordnet, der insbesondere Dichtwaben umfassen kann. Der Einlaufbelag kann einteilig sein oder mehrere (zusammenhängende oder voneinander getrennte) Komponenten umfassen. Insbesondere können an verschiedenen Spitzen verschiedene Komponenten des Einlaufbelags angeordnet sein, die miteinander verbunden sein (und so beispielsweise einen Ring ausbilden) können.

Der Rotor eines erfindungsgemäßen Verdichters bzw. einer erfindungsgemäßen Turbine umfasst mindestens eine Blisk gemäß einer der in dieser Schrift offenbarten Ausführungsformen, deren mindestens einer Dichtfin wenigstens teilweise in den Einlaufbelag eingreift.

Gemäß einer vorteilhaften Ausführungsform einer erfindungsgemäßen Blisk ist der verdickte Ringbereich des mindestens einen Dichtfins an einer radial äußeren Oberfläche mit einer schützenden Beschichtung überzogen. Vorzugsweise erstreckt sich die Beschichtung auf einen axialen Überhang des verdickten Ringbereichs über den radial weiter innen liegenden Ringbereich; wie erwähnt kann es an diesem Überhang bei einer axialen Bewegung von Rotor und Stator relativ zueinander zum Kontakt kommen, und die Beschichtung in diesem Bereich kann resultierende Nachteile, insbesondere Verschleiß oder Materialschädigung (z.B. durch Metallkontakt) verhindern oder zumindest vermindern.

Es sei angemerkt, dass die Beschichtung selbst auch aus mehreren Einzelschichten aufgebaut sein kann, also nicht zwingend über ihren gesamten Querschnittsbereich hinweg dieselben Materialeigenschaften aufweisen muss. So kann die Beschichtung (bei einer erfindungsgemäßen Blisk bzw. einer mit einem erfindungsgemäßen Verfahren hergestellten Blisk) beispielsweise eine Haftschicht aus einer Nickelbasislegierung, vorzugsweise NiAl, und eine Deckschicht aus Keramik, vorzugsweise Al₂O₃-TiO₂, umfassen. Die Beschichtung wird vorzugsweise durch Plasmaspritzen aufgetragen.

Ein erfindungsgemäßes Verfahren dient einer Herstellung einer Blisk, insbesondere einer erfindungsgemäßen Blisk gemäß einer der in dieser Schrift offenbarten Ausführungsformen. Das Verfahren umfasst ein Fertigen einer (einstückigen) Blisk mit einer um eine zentrale Achse herum verlaufenden Laufschaufelreihe und mit mindestens einem ringartigen Dichtfin, der zur Laufschaufelreihe axial versetzt und koaxial mit ihr verlaufend angeordnet ist und der einen radial äußeren Ringbereich aufweist, der gegenüber einem radial weiter innen liegenden Ringbereich des Dichtfins (in axialer Richtung) verdickt ist. Das Fertigen der Blisk kann beispielsweise ein Fräsen, Reibschweißen, präzises elektrochemisches Abtragen und/oder eine generative Fertigung (z.B. selektives Laserschmelzen, Elektronenstrahlschmelzen) umfassen.

Das Verfahren umfasst weiterhin ein Aufbringen einer Beschichtung mindestens auf eine radial äußere Oberfläche des verdickten Ringbereichs; das Aufbringen kann dabei insbesondere ausschließlich oder teilweise radial von außen erfolgen. Dies vereinfacht das Beschichten.

Gemäß einer bevorzugten Ausführungsform umfasst das Aufbringen ein Überziehen mindestens eines Teils einer Oberfläche eines axialen Überhangs des verdickten Ringbereichs über den radial weiter innen liegenden Ringbereich mit der Beschichtung; wie erwähnt kann so ein möglicher Kontaktbereich von Dichtfin und Einlaufbelag beim Einsatz der Blisk geschützt werden.

Vorzugsweise besteht der verdickte Ringbereich (oder sogar der gesamte Dichtfin) einer erfindungsgemäßen Blisk bzw. einer in einem erfindungsgemäßen Verfahren hergestellten Blisk aus einem einheitlichen bzw. homogenen Material. Eine gegebenenfalls vorhandene Beschichtung des verdickten Ringbereichs ist dann also insofern nicht als Teil desselben anzusehen, als die Dicke der Ringbereiche sich unter Vernachlässigung einer derartigen Beschichtung bestimmt und der verdickte Ringbereich bereits ohne die Beschichtung dicker ist als der radial weiter innen liegende Ringbereich.

Gemäß einer vorteilhaften Ausführungsform der vorliegenden Erfindung weist der verdickte Ringbereich an einer der Laufschaufelreihe zugewandten Seite und/oder an einer von ihr abgewandten Seite eine Kante auf, welche die zentrale Achse auf einer Kreisbahn umläuft und entlang der der verdickte Ringbereich seine größte axiale Dicke aufweist. Bei einem Beschichten des verdickten Ringbereichs von radial außen kann so auf der Kante eine Schutzschicht aufgebaut werden, der die Kante (z.B. infolge einer Zähigkeit des Beschichtungsmaterials) in axialer Richtung überragen kann. So kann ein Kontakt des verdickten Ringbereichs mit einem Einlaufbelag im Gebrauch der Blisk vermieden werden.

Vorzugsweise umfasst der verdickte Ringbereich einen radial äußersten Abschnitt, in dem sich der verdickte Ringbereich radial nach außen (durchgehend bzw. streng monoton) verjüngt (also mit zunehmender Entfernung von der zentralen Achse immer dünner wird). Insbesondere vorteilhaft ist eine Ausführungsform, bei der die axiale Dicke des verdickten Ringbereichs in einem derartigen radial äußersten Abschnitt angenommen wird; in diesem Fall wird also der verdickte Ringbereich ausgehend von seinem dicksten Bereich radial nach außen immer dünner. Weist der verdickte Ringbereich an seiner der Laufschaufel zu und an seiner der Laufschaufelreihe abgewandten Seite Kanten wie oben erwähnt auf, kann der radial äußerste Abschnitt beispielsweise radial nach innen von einer abstrakten Verbindungsfläche der Kanten begrenzt sein und sich radial nach außen verjüngen.

Eine derartige Verjüngung ermöglicht eine besonders große, radial von außen zugängliche Oberfläche des verdickten Ringbereichs und damit eine besonders weitflächige Beschichtung aus dieser Richtung.

Vorzugsweise wird bzw. ist die gesamte Oberfläche des radial äußersten Abschnitts mit einer (bzw. der) Beschichtung überzogen ist. Insbesondere kann die gemäß einem erfindungsgemäßen Verfahren mit der Beschichtung überzogene Oberfläche eine Oberfläche eines radial äußersten Abschnitts umfassen, in dem der verdickte Ringbereich maximale Dicke hat und der sich radial nach außen verjüngt.

Gemäß einer vorteilhaften Ausführungsform ist der verdickte Ringbereich (bzw. dessen radial äußerster Abschnitt) an seiner der Laufschaufelreihe zugewandten und/oder an seiner von dieser abgewandten Seite angeschrägt oder gewölbt, so dass er vorzugsweise eine radial äußerste (von der zentralen Achse abgewandte) Oberfläche aufweist, die den verdickten Ringbereich mindestens zum Teil auch seitlich umspannt und dabei gleichwohl von der zentralen Achse abgewandt ist: Dadurch können auch Teile der Seitenflächen des verdickten Ringbereichs durch ein Beschichten von radial außen mit einer entsprechenden Beschichtung überzogen werden; wie erwähnt können diese Seitenflächen bei axialen Schwankungen von Rotor und Gehäuse relativ zueinander in Kontakt kommen.

Der verdickte Ringbereich kann beispielsweise an einer der Laufschaufelreihe zugewandten und/oder an einer von ihr abgewandten Seite im Wesentlichen entlang der Mantelfläche eines (abstrakten, also gedachten, vorzugsweise geraden) Kreiskegels um die zentrale Achse verlaufen (die dann also mit der Kegelachse übereinstimmt). Gemäß einer vorteilhaften Ausführungsform beträgt der Öffnungswinkel eines derartigen Kreiskegels höchstens 120°, bevorzugter höchstens 100° und/oder mindestens 60°, bevorzugter mindestens 80°.

Derartige Öffnungswinkel ermöglichen ein vorteilhaftes Erreichen der jeweiligen seitlichen Flächen des verdickten Ringbereichs bei einem Beschichten (im Wesentlichen) radial von außen bzw. eine vorteilhaft weite Ausdehnung der derart erreichten Schrägflächen in radialer Richtung.

Gemäß einer vorteilhaften Ausführungsvariante weist der radial weiter innen liegende Ringbereich in radialer Richtung eine Ausdehnung auf, die mindestens doppelt so groß ist wie eine Ausdehnung des verdickten Ringbereichs in radialer Richtung. Der Dichtfin kann somit auch bei einem tiefen Eindringen in den Einlaufbelag durch den verdickten Ringbereich vor einem axialen Kontakt mit dem Einlaufbelag geschützt werden, nämlich entlang der vollen radialen Ausdehnung des radial weiter innen liegenden, weniger dicken Ringbereichs.

Vorzugsweise ist der radial weiter innen liegende Ringbereich und/oder der verdickte Ringbereich im Wesentlichen symmetrisch zu einer Ebene geformt, zu der die Rotationsachse senkrecht verläuft. Eine derartige Ausführungsform bietet einen vorteilhaften gleichartigen Schutz des Dichtfins nach beiden axialen Seiten.

Gemäß einer vorteilhaften Ausführungsform sind der radial weiter innen liegende Ringbereich sowie der verdickte Ringbereich jeweils Abschnitte eines vorgesehenen Einlaufbereichs des Dichtfins, der also dazu eingerichtet ist, (ggf. nach einem Einschleifvorgang während einer anfänglichen Verwendung der Blisk) in einen Einlaufbelag einzugreifen. Der Einlaufbereich ist dabei vorzugsweise auf einem Dichtfinsockel angeordnet, dessen Dicke in axialer Richtung größer ist als die Dicke des verdickten Ringbereichs. Dadurch wird die Stabilität des Dichtfins in einem radial innersten Bereich, der nicht für ein Eingreifen in einen Einlaufbelag vorgesehen ist, also im Betrieb von dem Einlaufbelag beabstandet bleibt, erhöht.

Gemäß der vorliegenden Anmeldung umfasst dabei der Begriff "Einlaufbelag" auch Honigwabenstrukturen.

Analog kann der weiter innen liegende Ringbereich sich vorzugsweise radial nach innen verdicken; dies verbessert die Stabilität des Dichtfins, insbesondere ihres Einlaufbereichs.

Im Folgenden werden bevorzugte Ausführungsbeispiele der Erfindung anhand von Zeichnungen näher erläutert. Es versteht sich, dass einzelne Elemente und Komponenten auch anders kombiniert werden können als dargestellt. Bezugszeichen für einander entsprechende Elemente sind figurenübergreifend verwendet und werden ggf. nicht für jede Figur neu beschrieben.

Es zeigen schematisch:
- Figur 1:: einen Aufbau einer exemplarischen erfindungsgemäßen Blisk in perspektivischer Darstellung
- Figur 2:: einen Teil eines Meridianschnitts eines beispielhaften erfindungsgemäßen Verdichters; und
- Figur 3: eine Detaildarstellung eines Dichtfins gemäß der vorliegenden Erfindung im Meridianschnitt.

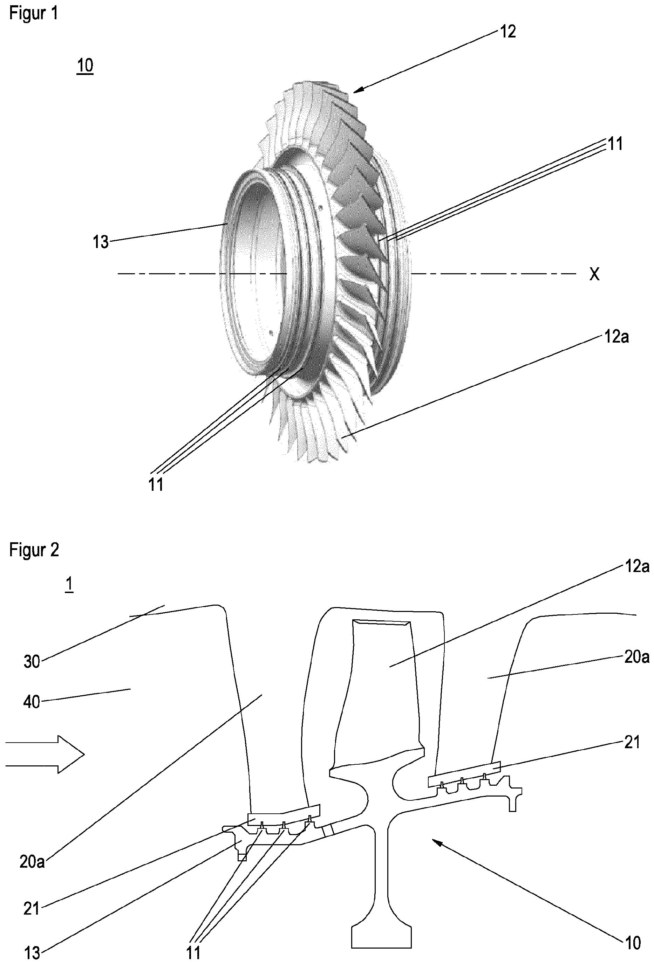

In Figur 1 ist eine exemplarische Blisk 10 mit einem Ringteil 13, einer Laufschaufelreihe 12 (mit Laufschaufeln 12a) und mehreren ringartigen Dichtfins 11 dargestellt, die (in dieser Figur nicht erkennbar) vorzugsweise einen radial äußeren und einen radial weiter innen liegenden Ringbereich wie in dieser Schrift beschrieben aufweisen. Die Laufschaufelreihe 12 und die Dichtfins 11 verlaufen koaxial, also um eine gemeinsame zentrale Achse X herum, die im Gebrauch der Blisk die Rotationsachse darstellt. In axialer Richtung sind die Dichtfins 11 von der Laufschaufelreihe 12 beabstandet, also versetzt zu dieser angeordnet.

In Figur 2 ist schematisch ein Ausschnitt eines Meridianschnitts eines erfindungsgemäßen Verdichters 1 dargestellt. Der Ausschnitt zeigt einen Teil einer Blisk 10 mit einer der zentralen Achse X sowie ein Gehäuse 30 des Verdichters, an dem Leitschaufelreihen mit Leitschaufeln 20a befestigt sind. Zwischen einem Ringteil 13 der Blisk, der mit anderen (nicht gezeigten) Bauteilen zusammen eine Rotorwelle bildet, und dem Gehäuse 30 ist ein Strömungskanal 40 ausgebildet, durch den beim bestimmungsgemäßen Gebrauch Luft in der mit einem Pfeil angegebenen Richtung geleitet wird.

An den radial innen angeordneten Spitzen der Leitschaufeln 20a sind Einlaufbeläge 21 angeordnet, in die die Dichtfins 11 eingreifen, so dass ein Luftdurchlass zwischen den Einlaufbelägen 21 und den Dichtfins 11 minimiert wird.

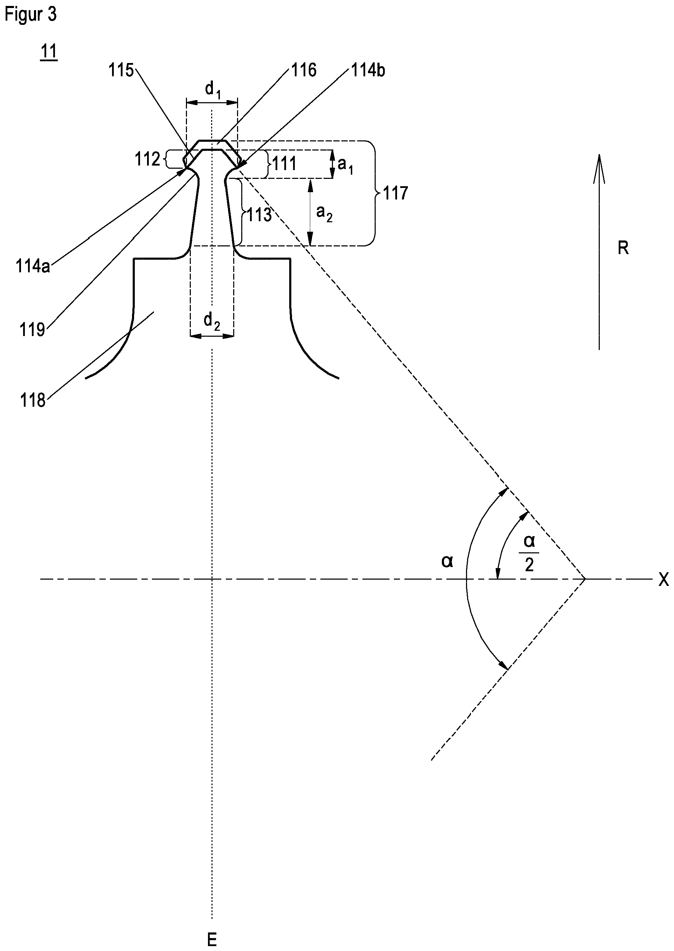

Figur 3 bietet eine Detailansicht eines Dichtfins gemäß einer Ausführungsform der vorliegenden Erfindung. Auch diese Figur zeigt einen Ausschnitt eines Meridianschnitts entlang der zentralen Achse X.

Der Dichtfin 11 (insbesondere sein verdickter Ringbereich 111 und sein radial weiter innen liegender Ringbereich 113) ist symmetrisch zu einer Ebene E ausgebildet, die senkrecht zur Bildebene der Figur 3 steht und von der zentralen Achse X orthogonal durchstoßen wird. Er umfasst einen radial äußeren Ringbereich 111 und einen radial weiter innen liegenden Ringbereich 113. Dabei ist der radial äußere Ringbereich 111 gegenüber dem einen radial weiter innen liegenden Ringbereich 113 verdickt, denn seine axiale Dicke d₁ ist größer als die axiale Dicke d₂ des weiter innen liegenden Ringbereichs 113. Die axialen Dicken der Ringbereiche sind dabei jeweils deren größte Ausdehnung in axialer Richtung; im in der Figur dargestellten Meridianschnitt ist eine derartige maximale Dicke somit eine maximale Breite der Darstellung des jeweiligen Ringbereichs (parallel zur zentralen Achse).

Im gezeigten Beispiel grenzen der radial äußere Ringbereich 111 und der radial weiter innen liegende Ringbereich 113 aneinander an und sind jeweils Teil eines Einlaufbereichs 117 des Dichtfins, der im bestimmungsgemäßen Gebrauch in einen Einlaufbelag 21 (wie er in der Figur 2 gezeigt ist) eingreifen kann. Der radial weiter innen liegende Ringbereich 113 verdickt sich zur zentralen Achse X hin, was seine Stabilität verbessert.

Der radial weiter innen liegende Ringbereich 113 weist dabei in radialer Richtung R eine Ausdehnung a₂ auf, die im gezeigten Beispiel mehr als doppelt so groß ist wie die Ausdehnung a₁ des verdickten, radial äußeren Ringbereichs 111 in radialer Richtung. Ein nachteiliger seitlicher Kontakt des Dichtfins mit einem Einlaufbelag kann somit nur in einem relativ kleinen Abschnitt des Einlaufbereichs 117 auftreten, und dieser kleine Abschnitt ist durch die Beschichtung geschützt.

Der Einlaufbereich 117 des gezeigten Dichtfins 11 ist auf einem Dichtfinsockel 118 angeordnet, der dazu vorgesehen ist, vom Einlaufbelag 21 beabstandet zu bleiben, insbesondere nicht in diesen einzugreifen. Der Dichtfinsockel 118 weist eine größere axiale Dicke auf als der Einlaufbereich 117 des Dichtfins, speziell als dessen verdickter radial äußerer Ringbereich 111; dies dient einer vorteilhaften Stabilisierung des Dichtfins.

Der verdickte, radial äußere Ringbereich 111 weist im gezeigten Beispiel an beiden Seiten (also an der in der Figur 3 nicht gezeigten Laufschaufelreihe zugewandten und der von ihr abgewandten Seite) eine der zentralen Achse zugewandte Oberfläche 119 auf, die einen Überhang des verdickten Ringbereichs 111 über den radial weiter innen liegenden Ringbereich 113 in Richtung radial nach innen begrenzt.

An einer radial äußeren Oberfläche 115 ist der verdickte, äußere Ringbereich 111 mit einer Beschichtung 116 überzogen. Die Beschichtung umspannt dabei den verdickten, äußeren Ringbereich 111 in seiner vollen Dicke und wirkt damit als Schutzschicht auch für den radial weiter innen liegenden, dünneren Ringbereich bei axialer Bewegung des Dichtfins (bzw. der ihn umfassenden Blisk) relativ zu einem Einlaufbelag.

Der verdickte Ringbereich 111 nimmt seine maximale axiale Dicke d₁ entlang Kanten 114a, 114b an. Die aufgebrachte Beschichtung 116, die die Kanten (z.B. infolge einer Zähigkeit des Beschichtungsmaterials und oder minimaler Neigung einer Beschichtungsrichtung) leicht in axialer Richtung überragt, bildet dadurch eine mögliche Kontaktfläche aus, an der der Dichtfin 11 einen Einlaufbelag berühren kann, und damit einen seitlichen Schutz des Dichtfins.

Ein radial äußerster Abschnitt 112 des verdickten Ringbereichs 111 verjüngt sich radial nach außen streng monoton. Im gezeigten Beispiel fußt der radial äußerste Abschnitt 112 auf einer gedachten Verbindungsfläche der Kanten 114a, 114b, so dass in diesem Abschnitt 112 die volle axiale Dicke des verdickten Ringbereichs erreicht wird, von der an sich der radial äußerste Abschnitt radial nach außen streng monoton verjüngt.

Insbesondere ist der verdickte Ringbereich 111 an seinen beiden Seiten (die jeweils einer nicht gezeigten Laufschaufelreihe zu- oder von ihr abgewandt sein könnten) angeschrägt. Die radial äußere Oberfläche 115 des verdickten Ringbereichs umspannt den verdickten Ringbereich infolgedessen zum Teil auch seitlich und ist dabei auch an diesen Seiten von der zentralen Achse abgewandt: Im Beschichtungsvorgang radial von außen konnten daher auch die angeschrägten Seitenflächen erreicht werden.

Die angeschrägten Seiten des verdickte Ringbereich verlaufen jeweils im Wesentlichen entlang der Mantelfläche eines (abstrakten, also gedachten, vorzugsweise geraden)

Kreiskegels um die zentrale Achse X; dies ist in der Figur der Übersichtlichkeit halber nur für eine der angeschrägten Seiten dargestellt. Der zugehörige Kegel hat einen Öffnungswinkel α, der vorzugsweise höchstens 120°, bevorzugter höchstens 100° und/oder mindestens 60°, bevorzugter mindestens 80° beträgt.

Eine erfindungsgemäße Blisk 10 für eine Gasturbine umfasst eine um eine zentrale Achse X herum verlaufende Laufschaufelreihe 12 und - zu dieser axial versetzt und koaxial verlaufend - mindestens einen ringartigen Dichtfin 11. Der Dichtfin weist einen radial äußeren Ringbereich 111 auf, der gegenüber einem radial weiter innen liegenden Ringbereich 113 verdickt ist.

Eine erfindungsgemäße Turbine umfasst einen Rotor und ein Gehäuse. Dieses umfasst mindestens eine Leitschaufelreihe mit mindestens einem Einlaufbelag 21. Der Rotor umfasst mindestens eine Blisk gemäß einer Ausführungsform der in dieser Schrift offenbarten Erfindung, deren mindestens einer Dichtfin 11 wenigstens teilweise in den Einlaufbelag eingreift.

Ein erfindungsgemäßer Verdichter 1 umfasst analog einen Rotor und ein Gehäuse 30. Dieses umfasst mindestens eine Leitschaufelreihe mit mindestens einem Einlaufbelag. Der Rotor umfasst mindestens eine Blisk 10 gemäß einer Ausführungsform der in dieser Schrift offenbarten Erfindung, deren mindestens einer Dichtfin 11 wenigstens teilweise in den Einlaufbelag eingreift.

Ein erfindungsgemäßes Verfahren zum Herstellen einer Blisk 10 für eine Gasturbine umfasst ein Fertigen einer Blisk 10 mit mindestens einem ringartigen Dichtfin 11 sowie ein Aufbringen einer Beschichtung 116 auf eine radial äußere Oberfläche 115 eines verdickten Ringbereichs 111 des Dichtfins 11.

### Bezugszeichen

- 1: Verdichter

- 10: Blisk
- 11: Dichtfin
- 12: Laufschaufelreihe
- 12a: Laufschaufel
- 13: Ring

- 20a: Leitschaufel
- 21: Einlaufbelag
- 30: Gehäuse
- 40: Strömungskanal

- 111: verdickter Ringbereich
- 112: radial äußerster Abschnitt des verdickten Ringbereichs
- 113: radial weiter innen liegender Ringbereich
- 114a, 114b: Kante, entlang der 111 seine größte axiale Dicke aufweist
- 115: radial äußerer Oberfläche
- 116: Beschichtung
- 117: Einlaufbereich
- 118: Dichtfinsockel
- 119: der zentralen Achse zugewandte Oberfläche

- a₁: Ausdehnung des verdickten Ringbereichs in radialer Richtung
- a₂: Ausdehnung des radial weiter innen liegenden Ringbereichs in radialer Richtung
- d₁: Dicke des verdickten Ringbereichs
- d₂: Dicke des radial weiter innen liegenden Ringbereichs
- E: Ebene
- R: radiale Richtung
- X: zentrale Achse

- α: Öffnungswinkel

## Patentansprüche

1. Blisk (10) für eine Gasturbine, wobei die Blisk eine um eine zentrale Achse (X) herum verlaufende Laufschaufelreihe (12) und dazu axial versetzt und koaxial verlaufend mindestens einen ringartigen Dichtfin (11) mit einem radial äußeren Ringbereich (111) aufweist, der gegenüber einem radial weiter innen liegenden Ringbereich (113) des Dichtfins (11) verdickt ist.

2. Blisk gemäß Anspruch 1, wobei der verdickte Ringbereich (111) an einer radial äußeren Oberfläche (115) mit einer Beschichtung (116) überzogen ist.

3. Blisk gemäß einem der Ansprüche 1 oder 2, wobei der verdickte Ringbereich (111) einen radial äußersten Abschnitt (112) umfasst, in dem sich der verdickte Ringbereich radial nach außen verjüngt.

4. Blisk gemäß einem der vorhergehenden Ansprüche, wobei sich der radial weiter innen liegende Ringbereich (113) radial nach innen verdickt.

5. Blisk gemäß einem der vorhergehenden Ansprüche, wobei eine Ausdehnung (a₂) des radial weiter innen liegenden Ringbereichs (113) in radialer Richtung (R) mindestens doppelt so groß ist wie eine Ausdehnung (a₁) des verdickten Ringbereichs (111) in radialer Richtung (R).

6. Blisk gemäß einem der vorhergehenden Ansprüche, wobei der radial weiter innen liegende Ringbereich (113) und/oder der verdickte Ringbereich (111) im Wesentlichen symmetrisch zu einer Ebene (E) geformt ist, zu der die zentrale Achse (X) senkrecht verläuft.

7. Blisk gemäß einem der vorhergehenden Ansprüche, wobei der radial weiter innen liegende Ringbereich (113) und der verdickte Ringbereich (111) Abschnitte eines auf einem Dichtfinsockel (118) angeordneten Einlaufbereichs (117) des Dichtfins (11) sind, wobei der Dichtfinsockel eine axiale Dicke hat, die größer ist als die axiale Dicke (d) des verdickten Ringbereichs.

8. Verdichter (1) für eine Gasturbine, der einen Rotor und ein Gehäuse (30) umfasst, wobei das Gehäuse mindestens eine Leitschaufelreihe mit radial nach innen verlaufenden Leitschaufeln (20a) umfasst, an deren Spitzen ein Einlaufbelag (21) angeordnet ist,
wobei der Rotor mindestens eine Blisk (10) gemäß einem der vorhergehenden Ansprüche umfasst, deren mindestens einer Dichtfin (11) wenigstens teilweise in den Einlaufbelag (21) eingreift.

9. Turbine für eine Gasturbine, die einen Rotor und ein Gehäuse (30) mit mindestens einer Leitschaufelreihe mit Leitschaufeln (20a) umfasst, an deren Spitzen jeweils ein Einlaufbelag (21) angeordnet ist,
wobei der Rotor mindestens eine Blisk (10) gemäß einem der Ansprüche 1 bis 7 umfasst, deren mindestens einer Dichtfin (11) wenigstens teilweise in den Einlaufbelag (21) eingreift.

10. Verfahren zum Herstellen einer Blisk (10) für eine Gasturbine, wobei das Verfahren ein Fertigen einer Blisk mit einer um eine zentrale Achse (X) herum verlaufenden Laufschaufelreihe (12) und mit mindestens einem ringartigen Dichtfin (11) umfasst, der zur Laufschaufelreihe axial versetzt und koaxial mit ihr verlaufend angeordnet ist und der einen radial äußeren Ringbereich (111) aufweist, der gegenüber einem radial weiter innen liegenden Ringbereich (113) verdickt ist
und wobei das Verfahren weiterhin ein Aufbringen einer Beschichtung (116) auf eine radial äußere Oberfläche (115) des verdickten Ringbereichs umfasst.

11. Verfahren gemäß Anspruch 10, wobei die mit der Beschichtung überzogene Oberfläche eine Oberfläche eines radial äußersten Abschnitts (112) umfasst, in dem der verdickte Ringbereich maximale Dicke (d) hat und der sich radial nach außen verjüngt.
